# EUROPÄISCHE PATENTANMELDUNG

(11) **EP 4 834 717 A1**
(43) Veröffentlichungstag der Anmeldung: **04.11.2026**
(21) Anmeldenummer: 26173540.1
(22) Anmeldetag: 21.04.2026
(51) Int. Cl.: B62D 13/06, B60W 30/06, B62D 15/02

(54) **VERFAHREN UND EIN SYSTEM ZUM PARKEN EINES EGO-NUTZFAHRZEUG AN EINER LADERAMPE ODER AN EINEM STRASSENRAND**

(30) Priorität: 25.04.2025 DE 102025116080
(71) Anmelder: Daimler Truck AG, 70771 Leinfelden-Echterdingen (DE)
(72) Erfinder: Schwalb, Tobias, 70771 Leinfelden-Echterdingen (DE)

(57) **Zusammenfassung**

Die Erfindung betrifft ein Verfahren und ein System zum Parken eines Ego-Nutzfahrzeug (11) an einer Laderampe (1) oder an einem Straßenrand (5), wobei in einem Schritt (S2) eine Absicht zu parken erkannt wird, in einem Schritt (S1) Charakteristika des Ego-Nutzfahrzeugs (11) ermittelt werden, in einem weiteren Schritt (S3) eine Fahrzeugumgebung ermittelt wird, wobei eine Anzahl von nutzbaren Stehplätzen (9) an Laderampen (1) oder Straßenrändern (5) oder bereits geparkten Nutzfahrzeugen (2) erkannt und die Endposition des Stehplatzes (9) ermittelt wird, wonach in einem weiteren Schritt (S4) ein Winkel (α) zwischen dem Ego-Nutzfahrzeug (11) in seiner momentanen Position und einer Endposition des Stehplatzes (9) errechnet wird, wonach eine Trajektorie zum Einparken aus den ermittelten Daten errechnet wird, wobei in einem weiteren Schritt (S5) ein Parkvorgang gestartet wird, wobei der Abstand (A) und Winkel (α) zur Endposition kontinuierlich ermittelt wird und die Fahrgeschwindigkeit des Ego-Nutzfahrzeugs (11) mit Annäherung an die Endposition reduziert wird.

## Beschreibung

Die Erfindung betrifft ein Verfahren zum Parken eines Ego-Nutzfahrzeug an einer Laderampe oder an einem Straßenrand gemäß dem Oberbegriff des Anspruchs 1 und ein System zum Parken eines Ego-Nutzfahrzeug an einer Laderampe oder an einem Straßenrand gemäß dem Oberbegriff des Anspruchs 8.

Im normalen Lieferverkehr fahren Nutzfahrzeuge (LKW) an Ladestellen oder Laderampen, um geladene Ladung abzuladen und/oder neue Ladung aufzunehmen. Dies passiert beispielsweise an großen Logistikhöfen mit vielen Laderampen, aber auch in kleinen Firmen (beispielsweise Supermärkten) mit zum Teil nur einer Laderampe. Zusätzlich fahren LKW geladene Güter zu kleineren Firmen und Privatpersonen oder holen diese dort ab. Hierbei parkt der LKW oft am Straßenrand, um seine Ladung auszuliefern oder aufzunehmen.

Das Rangieren an Laderampen oder das Parken am Straßenrand ist abhängig von den jeweiligen Gegebenheiten und dem Szenario zum Teil sehr komplex. Bei Laderampen ist die Komplexität abhängig von der Situation, dem Aufbau des Firmengeländes und der Strecke der Zufahrt. Weiterhin wird die Laderampe rückwärts und oft zusätzlich mit einem Auflieger oder Anhänger am LKW angefahren. Hierbei sollte das Verhalten und Einknicken des Anhängers oder Aufliegers bei der Rückwärtsfahrt beachtet werden. Bei der geraden Rückwärtsfahrt neigt der Anhänger oder Auflieger dazu, in eine Richtung auszubrechen, sodass konstant korrigiert werden sollte. Bei einer rückwärts zu fahrenden Kurve sollte zuerst durch Lenken in die entgegengesetzte Richtung die Kurve mit dem Zugfahrzeug aufgebaut und dann in der Kurve mit dem Zufahrzeug mitgelenkt oder der Kurvenradius korrigiert werden, um die Kurve oder den Kurvenradius zu halten. Weiterhin sollte bei der Anfahrt an eine Laderampe genau gearbeitet werden, da der Anhänger oder Auflieger mittig vor der Laderampe platziert und nicht nach links oder rechts versetzt werden sollte. Außerdem sollte die Ladekante des Anhängers oder Aufliegers parallel zur Laderampe sein, sodass hier kein Spalt entsteht und der LKW direkt beladen oder entladen werden kann.

Beim Parken am Straßenrand sind die Anforderungen ähnlich und das Anfahren ist ebenfalls komplex. Dies ist zum einen von der Größe (insbesondere Länge) der Parklücke abhängig, sodass der LKW auch hier rückwärts in die Parklücke rangiert werden muss. Zum anderen sollen weitere Verkehrsteilnehmer den LKW weiterhin in der Straße passieren können. Daher sollte der LKW möglichst nah an, aber nicht auf einem vorhandenen Bordstein oder am Straßenrand geparkt werden.

Im Stand der Technik ist der LKW-Fahrer dafür verantwortlich, den LKW mit Anhänger oder Auflieger rückwärts vor eine Laderampe zu fahren oder in einer Straße am Straßenrand zu parken. Hierbei kommt es zum größten Teil auf die Fähigkeiten und Erfahrungen des LKW-Fahrers an, wie er diese Aufgabe meistert. Zusätzlich gibt es verschiedene Hilfsmittel, welche der Fahrer nutzen kann.

Als wichtigstes Hilfsmittel kann der LKW-Fahrer Rückspiegel oder Spiegelersatzsysteme (Kamera außen mit Bildschirm innen im LKW) des LKW verwenden, um den Abstand und Winkel zur Laderampe, sowie den Abstand zu anderen Objekten oder Fahrzeugen bei der Rückwärtsfahrt einzuschätzen. Hierbei sind zum Teil Hilfslinien im Spiegel oder Bildschirm vorhanden, welche dem Fahrer helfen, den Abstand zur Laderampe einzuschätzen. Weiterhin kann der Fahrer aus dem Fenster schauen, um die Situation besser zu beurteilen. Im Allgemeinen ist bei der Rückwärtsfahrt ein Einweiser vorgeschrieben, welcher den Fahrer unterstützen und Abstände mit den Händen anzeigen kann. Zumeist ist allerdings kein Einweiser vorhanden, sodass der Fahrer nur selbst aussteigen und sich die Situation anschauen kann. Hierauf wird allerdings aus Zeitgründen und abhängig von den herrschenden Witterungsbedingungen oft verzichtet.

Als weiteres Hilfsmittel sind auf vielen Logistikhöfen Linien auf dem Boden bei den Laderampen gezeichnet. Diese trennen die Laderampen entweder mittig parallel (dies beutetet, dass der LKW-Fahrer mittig zwischen den Linien parken soll) oder linksbündig. Bei linksbündiger Anordnung muss der Fahrer den LKW mit der linken Seite (Fahrerseite) auf die Linie parken. Wichtig ist hierbei, dass der LKW wiederum parallel zur Linie steht. Wenn keine Linien vorhanden sind, kann sich der LKW-Fahrer an anderen geparkten LKW orientieren, da die Laderampen zumeist so angeordnet sind, dass die LKW parallel parken. Zusätzlich, falls die LKW von der gleichen Art sind und die gleiche Art von Auflieger oder Anhänger besitzen (was bei Speditionen oft der Fall ist), kann sich der Fahrer bezüglich des Abstands zur Laderampe orientieren.

Die Herausforderung, die bei den oben genannten Hilfsmitteln weiterhin besteht ist, dass der LKW-Fahrer die Fahrmanöver ausführen muss und hierbei Lenkwinkel und Abstände auf Basis seiner Fähigkeiten und Erfahrungen einschätzen muss. Weiterhin muss der Fahrer durch Lenkmanöver in der Zugmaschine den Auflieger oder Anhänger exakt platzieren, was wie oben beschrieben wegen des Verhaltens des Aufliegers oder Anhängers bei einer Rückwärtsfahrt komplex ist.

Es gibt weitere technische Hilfsmittel, welche auf Logistikhöfen zum Teil zusätzlich verbaut werden. Beispielsweise werden an den Laderampen Abstandssensoren angebracht und dem LKW-Fahrer über Lampen (grün, gelb, rot) der Abstand angezeigt, sodass der Fahrer weiß, wann er langsam fahren oder anhalten muss.

Weiterhin gibt es LKW-Anbausysteme, welche den Abstand in der Kabine des Fahrers auf einem Bildschirm anzeigen. Diese nutzen einen zusätzlichen Sensor am Auflieger oder Anhänger, welcher den Abstand zur Laderampe misst. Diese Systeme funktionieren allerdings zumeist nur so lange, wie eine feste oder kompatible Kombination aus Zugmaschine und Auflieger oder Anhänger gefahren wird, da eine zusätzliche Verbindung (zumeist mit Kabel) zwischen LKW und Auflieger oder Anhänger benötigt wird.

Eine andere Möglichkeit ist eine ausfahrbare Laderampe am Gebäude, hierbei fährt der LKW-Fahrer nicht komplett an die Rampe, sondern kann in einem Abstand anhalten. Die Rampe wird anschließend mechanisch zum LKW ausgefahren, wenn dieser steht. Die ausfahrbare Rampe kann dabei oft Fehler im Winkel ausgleichen, wenn die LKW-Ladekante zunächst nicht parallel zur Rampe steht.

Weiterhin besitzen manche LKW (zumeist kleinere LKW) eine mechanisch klappbare Laderampe. Auch hier kann der LKW-Fahrer in einem Abstand von der Laderampe des Gebäudes anhalten und die LKW-Laderampe dann auf die Laderampe am Gebäude herunterklappen. Hierbei können ebenfalls Abstand und Winkel ausgeglichen werden.

Der Nachteil dieser beschriebenen Systeme ist, dass diese auf dem Logistikhof oder am LKW vorhanden sein oder zusätzlich installiert werden müssen, was Kosten verursacht. Weiterhin lösen diese Systeme nicht das Problem, dass der LKW-Fahrer zur Laderampe rückwärts heranfahren muss. Auch kann der LKW-Fahrer nicht in einem zu großen Abstand oder zu großem Winkel parken, um andere Laderampen nicht zu blockieren.

Beim Parken am Straßenrand ist im Stand der Technik der LKW-Fahrer ebenfalls dafür verantwortlich, den LKW, gegebenenfalls mit Anhänger oder Auflieger, zu parken, um diesen zu beladen oder zu entladen. Hierbei ist je nach Art der Parklücke wiederum ein Rückwärtsparkmanöver notwendig, da hierdurch in kleinere Parklücken manövriert werden kann. Es kommt zum größten Teil auf die Fähigkeiten und Erfahrungen des LKW-Fahrers an, wie er diese Aufgabe meistert. Hierbei gibt es ebenfalls verschiedene Hilfsmittel, welche der Fahrer nutzen kann.

Als wichtigstes Hilfsmittel kann der LKW-Fahrer die Spiegel oder die Spiegelersatzsysteme (Kamera außen mit Bildschirm innen) des LKW verwenden, um den Abstand zu anderen Objekten oder Fahrzeugen und zum Bordstein einzuschätzen. Hierbei sind im Spiegel oder Bildschirm zum Teil Hilfslinien vorhanden, welche dem Fahrer helfen, den Abstand und Winkel einzuschätzen. Weiterhin kann der Fahrer aus dem Fenster schauen, um die Situation besser zu beurteilen. Im Allgemeinen ist bei der Rückwärtsfahrt ein Einweiser vorgeschrieben, welcher den Fahrer unterstützen und Bewegungen und/oder Abstände mit den Händen anzeigen kann. Zumeist ist allerdings kein Einweiser vorhanden, sodass der Fahrer selbst aussteigen und sich die Situation anschauen kann. Hierauf wird allerdings aus Zeitgründen und abhängig von den herrschenden Witterungsbedingungen oft verzichtet.

Die Position und der Abstand (Abstand zum Bordstein) der hinteren Räder des LKW können ebenfalls zur Unterstützung genutzt werden, da diese den Drehpunkt des LKW darstellen. Weiter kann der Fahrer, wenn der LKW unbeladen ist und eine Liftachse besitzt, den Drehpunkt durch Absenken oder Anheben der Liftachse beeinflussen. Auch eine gelenkte Hinterachse kann das Parkmanöver beeinflussen.

DE 10 2023 115 070 A1 beschreibt ein Rangierassistenzsystem für ein Nutzfahrzeug, mit einer Erfassungseinrichtung zum Erfassen von Daten einer unmittelbaren Umgebung des Nutzfahrzeugs, mit einer Steuerungseinrichtung zum wenigstens teilautonomen Steuern des Nutzfahrzeugs, wobei das Rangierassistenzsystem dazu ausgebildet ist, mittels einer elektronischen Recheneinrichtung eine Rangiertrajektorie in Abhängigkeit von den erfassten Daten zu berechnen, wobei vorgegebene Kartenbereiche unterschiedlicher Dimensionierungen einer digitalen Karte der unmittelbaren Umgebung auf einer Anzeigevorrichtung von einem Fahrer auswählbar sind, wobei in Abhängigkeit von wenigstens einem ausgewählten Kartenbereich und den erfassten Daten, die Rangiertrajektorie berechenbar und das Nutzfahrzeug mittels der Steuerungseinrichtung wenigstens teilautonom rangierbar ist.

DE 20 2024 102 093 U1 beschreibt ein Managementsystem zum Navigieren, Rangieren und/oder Überwachen eines Lastkraftwagens in eine beziehungsweise von einer Parkposition an einer Verladerampe zum Be- und Entladen des Lastkraftwagens, umfassend
a) ein prozessorgesteuertes Kontroll- und Steuersystem mit einem Datenspeicher, welches den Lastkraftwagen identifiziert, die Bewegungen des Lastkraftwagens auf einem Gelände überwacht und/oder für den Fahrer des Lastkraftwagens Steuerungsanweisungen gibt,
b) eine Kameraanordnung zur Erfassung des Lastkraftwagens und/oder seiner Position auf dem Gelände, wobei die Kameraanordnung mit dem Kontroll- und Steuersystem kommuniziert und
c) eine Lichtsignal- und/oder eine Anzeigenanlage und/oder eine akustische Signalgeberanlage, die dem Fahrer Handlungsanweisungen signalisieren, welche Verladerampe an- oder von welcher Verladerampe abgefahren oder in welche oder von welcher Warteposition navigiert werden soll, wobei die Lichtsignal- und/oder eine Anzeigenanlage und/oder die akustische Signalgeberanlage mit dem Kontroll- und Steuersystem kommunizieren.

Der Erfindung liegt die Aufgabe zu Grunde, ein neuartiges Verfahren und ein neuartiges System zum Parken eines Ego-Nutzfahrzeug an einer Laderampe oder an einem Straßenrand anzugeben.

Die Aufgabe wird erfindungsgemäß gelöst durch ein Verfahren zum Parken eines Ego-Nutzfahrzeug an einer Laderampe oder an einem Straßenrand mit den Merkmalen des Anspruchs 1 und ein System zum Parken eines Ego-Nutzfahrzeug an einer Laderampe oder an einem Straßenrand mit den Merkmalen des Anspruchs 8.

Vorteilhafte Ausgestaltungen der Erfindung sind Gegenstand der Unteransprüche.

Es wird ein Verfahren und ein System zum Parken eines Ego-Nutzfahrzeug an einer Laderampe oder an einem Straßenrand vorgeschlagen.

Um dem Fahrer des Ego-Nutzfahrzeugs ein unfallfreies und präzises Parken zu ermöglichen, wird erfindungsgemäß vorgeschlagen, dass in einem Schritt eine Absicht zu parken erkannt wird, in einem Schritt Charakteristika des Ego-Nutzfahrzeugs ermittelt werden, in einem weiteren Schritt eine Fahrzeugumgebung ermittelt wird, wobei eine Anzahl von nutzbaren Stehplätzen an Laderampen oder Straßenrändern oder bereits geparkten Nutzfahrzeugen erkannt und die Endposition des Stehplatzes ermittelt wird, wonach in einem weiteren Schritt ein Winkel zwischen dem Ego-Nutzfahrzeug in seiner momentanen Position und einer Endposition des Stehplatzes errechnet wird, wonach eine Trajektorie zum Einparken aus den ermittelten Daten errechnet wird, wobei in einem weiteren Schritt ein Parkvorgang gestartet wird, wobei der Abstand und Winkel zur Endposition kontinuierlich ermittelt wird und die Fahrgeschwindigkeit des Ego-Nutzfahrzeugs mit Annäherung an die Endposition reduziert wird.

Durch die erfindungsgemäße Lösung wird ein Sicherheitsgewinn erzielt, da zum Erreichen der Endposition und zur Durchführung des Parkmanövers der Abstand zu Objekten berücksichtigt wird. Ferner wird ein Komfortgewinn erzielt, da die Endposition für LKW-Parkszenarien automatisch ermittelt und das manuelle Parken oder automatisierte Parken in komplexen Situationen unterstützt wird. Ferner werden Kosten reduziert, da durch schnelleres Parken (weniger manövrieren) weniger Kraftstoff verbraucht wird und weniger Beschädigungen an Fahrzeugen oder Gebäuden auftreten.

Ausführungsbeispiele der Erfindung werden im Folgenden anhand einer Zeichnung näher erläutert.

Dabei zeigen:
- Fig. 1:: eine schematische Ansicht einer Laderampe mit mehreren Nutzfahrzeugen, die an der Laderampe in Schrägaufstellung parken,
- Fig. 2:: eine schematische Ansicht einer Laderampe mit mehreren Nutzfahrzeugen, die an der Laderampe in Senkrechtaufstellung parken,
- Fig. 3:: eine schematische Ansicht einer Straße mit mehreren Fahrzeugen, die an einem Straßenrand entlang der Straße in Längsaufstellung parken, und
- Fig. 4:: eine schematische Ansicht eines Verfahrens zur Ermittlung einer Parkposition eines Ego-Nutzfahrzeugs an einer Laderampe oder am Straßenrand.

Einander entsprechende Teile sind in allen Figuren mit den gleichen Bezugszeichen versehen.

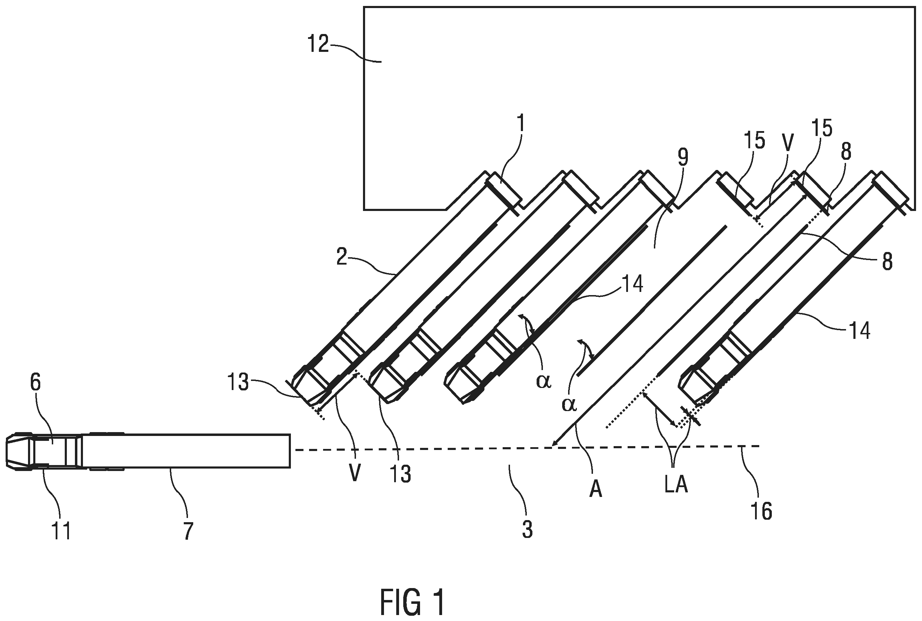

Figur 1 ist eine schematische Ansicht einer Laderampe 1 mit mehreren Nutzfahrzeugen 2, die an der Laderampe 1 in Schrägaufstellung parken.

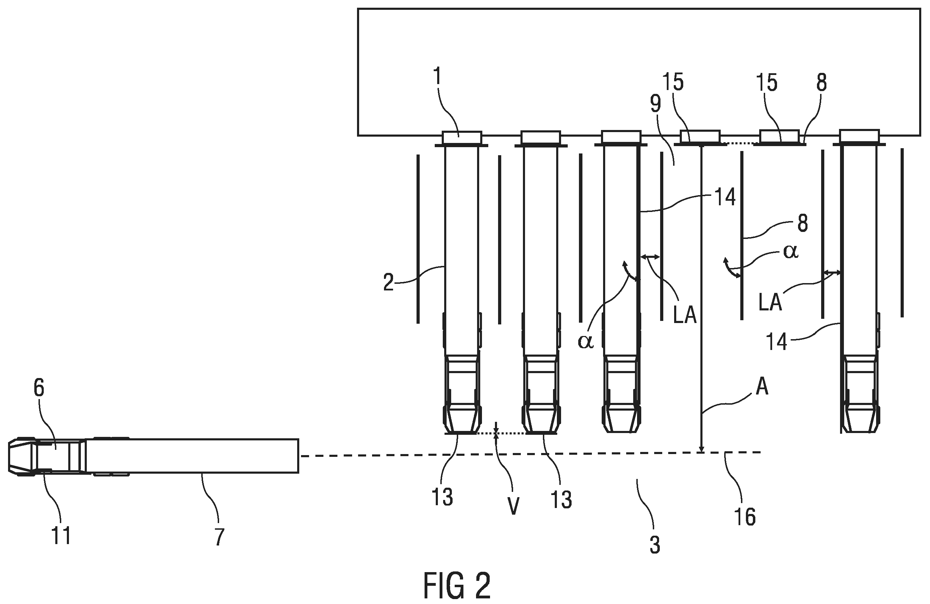

Figur 2 ist eine schematische Ansicht einer Laderampe 1 mit mehreren Nutzfahrzeugen 2, die an der Laderampe 1 in Senkrechtaufstellung parken.

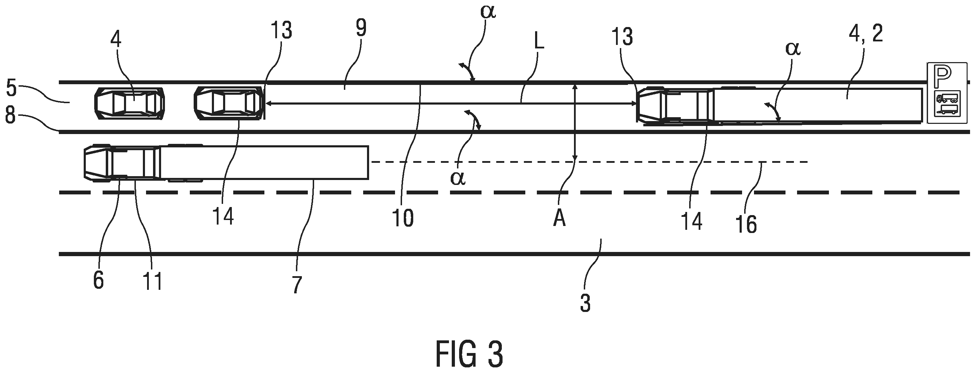

Figur 3 ist eine schematische Ansicht einer Straße 3 mit mehreren Fahrzeugen 4, die an einem Straßenrand 5 entlang der Straße 3 in Längsaufstellung parken.

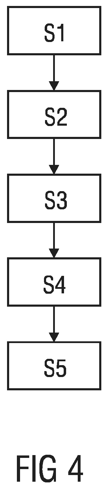

Figur 4 ist eine schematische Ansicht eines Verfahrens zur Ermittlung einer Parkposition eines Ego-Nutzfahrzeugs 11 an einer Laderampe 1 oder am Straßenrand 5.

Die Idee der vorliegenden Erfindung ist, durch technische Mittel im Ego-Nutzfahrzeug 11, insbesondere in einer Zugmaschine 6, einen Fahrer des Ego-Nutzfahrzeugs 11 bei der Anfahrt zur Laderampe 1 oder beim Parken am Straßenrand 5 zu unterstützen. Der Fokus der vorliegenden Erfindung ist dabei, spezifische Eigenschaften der Umgebung zu erkennen und das Szenario zu interpretieren, um eine Zielposition für einen Parkvorgang zu ermitteln. Darauf aufbauend wird der Fahrer beim manuellen Parken des Ego-Nutzfahrzeugs 11 unterstützt oder es wird ein automatisierter Parkvorgang ausgeführt.

In einem ersten Schritt S1 werden von einem System im Ego-Nutzfahrzeug 11 die Eigenschaften des Ego-Nutzfahrzeugs 11, einschließlich der Zugmaschine 6 und gegebenenfalls einem Auflieger 7 und/oder Anhänger 7 erfasst. Dabei wird die Art der Zugmaschine 6 und die Art des Anhängers 7 und/oder Aufliegers 7 ermittelt. Es wird beispielsweise erfasst, ob es sich um eine Sattelzugmaschine mit Auflieger 7 oder um ein Ego-Nutzfahrzeug 11 mit Aufbau und gegebenenfalls einem Anhänger 7 handelt. Weiterhin wird die Länge des gesamten Ego-Nutzfahrzeugs 11 oder Ego-Nutzfahrzeuggespanns festgestellt. Zusätzlich wird erfasst, ob am Ego-Nutzfahrzeug 11 eine Liftachse und/oder eine gelenkte Hinterachse vorhanden ist. Diese Daten können durch Auslesen von Daten aus mindestens einem im Ego-Nutzfahrzeug 11 vorhandenen Steuergerät ermittelt werden. Alternativ können diese Daten durch mindestens eine nach hinten gerichtete Kamera, insbesondere mindestens eine Spiegelersatzsystem (Kamera außen am Ego-Nutzfahrzeug 11 mit Bildschirm innen) erfasst werden.

In einem zweiten Schritt S2 wird der Beginn eines Parkmanövers erkannt. Dies kann zum Beispiel auf der Erkennung von langsamer Fahrt des Ego-Nutzfahrzeugs 11 und/oder dem Einlegen eines Rückwärtsgangs im Ego-Nutzfahrzeug 11 erkannt werden. Alternativ kann der Beginn eines Parkmanövers durch Drücken einer Taste im Ego-Nutzfahrzeug 11, beispielsweise auf einer Mensch-Maschine-Schnittstelle, signalisiert werden. Dies kann kombiniert werden mit einer Positionserkennung (GPS-Position), welche dem System beispielsweise anzeigt, dass das Ego-Nutzfahrzeug 11 sich auf einem Firmengelände und nicht auf einer öffentlichen Straße 3 befindet (zum Beispiel per Geofencing). Weiterhin kann dies kombiniert werden mit einer Bilderkennung (beispielsweise durch Kl-Algorithmen), welche vorhandene Kameras des Ego-Nutzfahrzeugs 11, insbesondere der Zugmaschine 6 (beispielsweise eine Frontkamera und/oder Kameras eines Spiegelersatzsystems) nutzt und eine Laderampe 1 oder eine Parklücke 9 am Straßenrand 5 durch deren signifikantes Aussehen erkennt (beispielsweise per Mustererkennung). Hierbei können andere geparkte Fahrzeuge 4, beispielsweise Nutzfahrzeuge 2, deren seitliche Ausrichtung LA, Bordsteine 10 oder Linien 8 auf dem Boden erkannt werden, welche Parkplätze begrenzen. Dies alles kann als Hinweis interpretiert werden, dass der Fahrer des Ego-Nutzfahrzeugs 11 parken möchte.

In einem dritten Schritt S3 werden spezifische Informationen über die Umgebung des Ego-Nutzfahrzeugs 11 gesammelt, um in einem vierten Schritt S4 eine Endposition für den Parkvorgang des Ego-Nutzfahrzeugs 11 im aktuellen Szenario zu ermitteln. Die Informationen werden im dritten Schritt S3 mit Hilfe von an der Zugmaschine 6 des Ego-Nutzfahrzeugs 11 befindlicher Sensorik mit einem oder mehreren Sensoren (beispielsweise mindestens eines Radarsensors, mindestens einer Kamera, mindestens eines Lidarsensors und/oder mindestens eines Ultraschallsensors) gesammelt und im vierten Schritt S4 von einem Steuergerät des Systems ausgewertet. Sollten dabei mehrere Laderampen 1 oder Parklücken 9 vorhanden sein, wird für jede davon eine separate Endposition ermittelt und der Fahrer kann später (in einem fünften Schritt S5) eine Parkposition auswählen.

Es wird ermittelt, wie der Fahrer parken möchte, beispielsweise ob er rückwärts parallel am Straßenrand 5 parken oder rückwärts an eine Laderampe 1 rangieren möchte. Hierfür können mit Hilfe der Sensorik oder einer Fusion der Daten der verschiedenen Sensoren der Sensorik das Vorhandensein eines Bordsteins 10, einer Laderampe 1 und/oder anderer Fahrzeuge 4 erkannt werden. Bei einer Kamera können hierbei Bildverarbeitungsalgorithmen oder Kl-Algorithmen genutzt werden, welche das signifikante Aussehen von Fahrzeugen 4, Laderampen 1 oder Parklücken 9 am Straßenrand 5 erkennen. Mit einem Radarsensor, Lidarsensor oder Ultraschallsensor können lange, gerade oder rechteckige Objekte erkannt werden. Wenn ein Bordstein 10 erkannt wird und/oder wenn erkannt wird, dass andere Fahrzeuge 4 parallel zur Ausrichtung und/oder zum Fahrweg 16 des Ego-Nutzfahrzeugs 11 geparkt sind, ist es sehr wahrscheinlich, dass der Fahrer parallel am Straßenrand 5 parken möchte. Werden hingegen eine Laderampe 1 und/oder andere Fahrzeuge 4, insbesondere Nutzfahrzeuge 2, erkannt, welche in einem Winkel α von 45° bis 135° zum Ego-Nutzfahrzeug 11 und/oder zu dessen Fahrweg 16 geparkt sind, dann kann von einem Parken rückwärts an eine Laderampe 1 ausgegangen werden.

Die Ermittlung des Parkmanövers (Parallel- oder Längsparken) ist ein Teil der Ermittlung der Endposition. Bei der Laderampe 1 sollte zusätzlich der korrekte Winkel α und Abstand A ermittelt werden. Bezüglich des Winkels α soll eine Ladekante des Ego-Nutzfahrzeugs 11 parallel zur Laderampe 1 sein, um ohne Spalt in das Ego-Nutzfahrzeug 11 laden zu können und zum Beispiel mit einem Gabelstapler oder Hubwagen direkt in das Ego-Nutzfahrzeug 11 fahren zu können. Der Abstand A ist wichtig, da viele Laderampen 1 an Gebäuden 12 nicht bündig mit dem Gebäude 12 sind sondern hervorstehen. Das Ego-Nutzfahrzeug 11 muss vor der Laderampe 1 angehalten werden, um diesen nicht zu beschädigen. Beim Parken am Straßenrand 5 müssen die anderen Fahrzeuge 4 erkannt werden, um in der Parklücke 9 ausreichend Platz zum Entladen zu haben. Hierbei ist die Länge L der Parklücke 9 wichtig. Zusätzlich soll möglichst nah am Bordstein 10 geparkt werden, um zum einen Fahrzeugen 4 das Vorbeifahren in der Straße 3 zu ermöglichen und zum anderen auch den Bordstein 10 nicht für Fußgänger zu blockieren.

Bei Laderampen 1 beträgt der Winkel α in der Regel von 45° bis zu 135°, wodurch der Winkel α mit 45° in die eine oder andere Richtung im Vergleich zum rechten Winkel α von 90° zum Gebäude 12 beschrieben ist. Der Winkel α ist je nach Standort (oder Firma) verschieden. Allerdings haben in den allermeisten Fällen alle Laderampen 1 an einem Standort (zum Beispiel Speditionen) den gleichen Winkel α. Um den Winkel α der Laderampe 1 zu ermitteln stehen verschiedene Möglichkeiten zur Verfügung.

Die beste und sicherste Option ist dabei die Erkennung von vorhandenen Linien 8 auf dem Boden, da diese in Verlängerung zur Laderampe 1 oder im rechten Winkel α zur Laderampe 1 gezeichnet sind. Zusätzlich soll dabei erkannt werden, ob die Linien 8 zwischen den Laderampen 1 gezeichnet sind und das Ego-Nutzfahrzeug 11 somit in der Mitte parken soll oder ob die Linien 8 an der linken Seite oder rechten Seite (meist nur bei Rechtsverkehr) der Laderampe 1 gezeichnet sind. Dies kann wiederum erkannt werden, indem zum einen die Positionen der Linien 8 mit den Begrenzungen der Laderampen 1 verglichen werden oder die Position von bereits angedockten Nutzfahrzeugen 2 wird in Bezug auf die Linien 8 bestimmt, um zu ermitteln, ob diese Nutzfahrzeuge 2 zwischen den Linien 8 oder rechtsbündig oder linksbündig an einer Linie 8 geparkt sind. Hierbei ist ebenfalls die Anordnung für jede Laderampe 1 gleich.

Wenn keine Linien 8 vorhanden sind besteht die Möglichkeit, den Winkel α der Laderampe 1 zu erkennen, indem der Winkel α der an den anderen Laderampen 1 geparkten Nutzfahrzeuge 2 ermittelt wird. Hierzu wird eine Seite der Nutzfahrzeuge 2 mit den Sensoren detektiert und der Winkel α errechnet. Dieser Winkel α wird ebenfalls in Bezug auf den rechten Winkel α zur Ladekante der Laderampe 1 am Gebäude 12 bestimmt.

Eine weitere Möglichkeit zur Erkennung des Winkels α besteht in der Erkennung der Laderampe 1 selbst und der Ermittlung des Winkels α anhand der Laderampe 1. Diese Methode hat den Vorteil, dass keine Linie 8 und kein anderes Nutzfahrzeugs 2 vorhanden sein muss.

Generell können bei den beschriebenen Methoden immer mehrere Linien 8, Kanten 13, 14, 15 (beispielsweise eine Vorderkante 13 oder eine Seitenkante 14) von Nutzfahrzeugen 2 oder Laderampen 1 (beispielsweise eine Kante 15 der Laderampe 1) detektiert werden und ein Mittelwert errechnet werden, um Ungenauigkeiten auszugleichen. Weiterhin werden mehrere Messungen aus verschiedenen Winkeln (zum Beispiel während der Vorbeifahrt vor dem Rückwärtsparken) zusammengefasst, um ein Umgebungsmodell aufzubauen. Das Umgebungsmodell wird zusätzlich während des Parkvorgangs weiter ausgebaut oder aktualisiert und der ermittelte Winkel α neu bestimmt.

Den Abstand A zur Kante 15 der Laderampe 1 zu ermitteln ist komplexer. Hierbei wird der ermittelte Abstand A während der Anfahrt zur Laderampe 1 immer wieder korrigiert, um das Ego-Nutzfahrzeug 11 vor der Laderampe 1 anzuhalten. Um den Abstand A zu ermitteln, stehen verschiedene Möglichkeiten dem System zur Verfügung.

Als erste Möglichkeit kann eine vorhandene Linie 8 auf dem Boden zur Kante 15 der Laderampe 1 erkannt werden. Diese Linie 8 ist direkt unter der Kante 15 der Laderampe 1 verlängert nach links und/oder rechts auf den Boden gezeichnet. Diese Linie 8 kann mit den Kameras des Spiegelersatzsystems während des Rückwärtseinparkens erkannt werden und darauf aufbauend kann der Abstand A ermittelt werden.

Die zweite Möglichkeit besteht darin, den Abstand A zur Laderampe 1 direkt zu erkennen. Hierbei ist es allerdings wichtig zu erkennen, ob die Laderampe 1 bündig zum Gebäude 12 ist oder hervorsteht. Wenn sie hervorsteht soll erkannt werden, wie weit sie sich von der Fläche zum Gebäude 12 unterscheidet. Mit Daten aus einer Kamera kann dies über Bildverarbeitung und/oder KI-Algorithmen gelöst werden. Bei der Verwendung eines Radarsensors und/oder Lidarsensors muss ein Objekt in entsprechender Höhe erkannt werden, sodass nicht der Abstand A zum Gebäude 12 selbst gemessen wird, daher sind Sensoriken mit Höhenmessung von Vorteil.

Eine dritte Möglichkeit besteht in der Messung anderer bereits geparkter Nutzfahrzeuge 2. Hierbei wird der Typ der bereits an Laderampen 1 geparkten Nutzfahrzeuge 2 mit Hilfe von Bilderkennung und Größenerkennung erkannt und mit dem Ego-Nutzfahrzeug 11 verglichen.

Wenn ein oder mehrere Nutzfahrzeuge 2 gleicher Art und/oder Länge erkannt werden, dann kann das Verfahren sich in Bezug auf den Abstand A an diesen orientieren. Dabei wird die Vorderkante 13 der Nutzfahrzeuge 2 und ein Versatz V der Vorderkanten 13 der Nutzfahrzeuge 2 in Bezug auf die Ladekanten 1 erkannt. Hieraus kann mit dem Wissen über die Länge und die Anzahl und Position der anzufahrenden Laderampe 1 der Abstand A ermittelt werden. Diese Methode setzt das Vorhandensein mehrerer gleicher Nutzfahrzeuge 2 voraus. Dies ist allerdings an vielen großen Logistikhöfen und bei Speditionen häufig der Fall. Der beschriebene Versatz V kann ebenfalls aus dem Versatz V der Laderampen 1 direkt ermittelt werden (beispielsweise wenn nur ein Nutzfahrzeug 2 an den Laderampen 1 geparkt ist). Hierbei werden die relativen Abstände A der Laderampen 1 im ermittelten Winkel α gemessen. Diese Methode hat den Vorteil, dass nur ein relativer Abstand A benötigt wird und hierbei eventuell Schutzanbauten irrelevant sind, da diese normalerweise an allen Laderampen 1 gleich sind.

Eine vierte Möglichkeit besteht in der Erkennung und Nutzung bereits vorhandener Systeme zur Erkennung des Abstands A. So kann mit den nach hinten gerichteten Kameras eine Ampel erkannt werden. Wenn diese gelb zeigt wird die Geschwindigkeit des Ego-Nutzfahrzeugs 11 beim Anfahren verringert; wenn diese rot zeigt, wird das Ego-Nutzfahrzeug 11 angehalten. Eine drahtlose Übermittlung des Abstandes A und die Nutzung dieser Information ist ebenfalls möglich.

Beim Parken am Straßenrand 5 ist die Festlegung der Endposition weniger komplex. Hierbei wird die Größe und/oder Länge L der Parklücke 9 und ein eventuell vorhandener Bordstein 10 erkannt und/oder vermessen. Bei der Länge L wird kontrolliert, ob die Parklücke 9 ausreichend lang für das Ego-Nutzfahrzeug 11 und das Parkmanöver ist. Es wird auf Basis der Lenkmanöver zum in die Parklücke 9 fahren eine Parklücke 9 benötigt, die im Vergleich zur Länge des Ego-Nutzfahrzeugs 11 um einen bestimmten Faktor länger ist. Der Faktor ist dabei abhängig von der Art des Ego-Nutzfahrzeugs 11 (Sattelzug oder Pritsche mit Anhänger), sowie des Wendekreises des Ego-Nutzfahrzeugs 11. Ein weiterer wichtiger Punkt ist, ob beim Parken Teile des Ego-Nutzfahrzeugs 11 über den Bordstein 10 geschwenkt werden können oder ob und in welchem Abstand A sich auf dem Bordstein 10 eine hohe Wand, ein Verkehrsschild oder andere Objekte befinden. Die Länge L der Parklücke 9 wird durch die vorhandenen Sensoren (Radar, Lidar, Ultraschall und/oder Kamera) erkannt, indem die Kanten 13 der begrenzenden Objekte erkannt werden. Diese Objekte können andere Fahrzeuge 4, aber auch Poller oder Straßeneinmündungen sein.

Ebenfalls ist die Tiefe der Parklücke 9 in Bezug auf die anderen Objekte wichtig, da diese umfahren werden müssen. Hierbei wird beispielsweise eine längere Parklücke 9 benötigt, wenn das vordere Objekt ein Nutzfahrzeug 2 ist (anstelle eines PKW). Das Nutzfahrzeug 2 ist breiter und somit kann später gelenkt werden und es muss tiefer in die Parklücke 9 gefahren werden. Die Tiefe der Parklücke 9 wird ebenfalls durch die vorhandenen Sensoren (Radar, Lidar, Ultraschall und/oder Kamera) erkannt, in dem die Kanten 13 der begrenzenden Objekte detektiert werden.

Die Ausrichtung und/oder der Winkel α beim Parken am Straßenrand 5 ist zumeist eindeutig, da das Ziel ist, parallel zu einem vorhandenen Bordstein 10, zu einer vorhandenen Linie 8, in Ausrichtung zu den anderen Fahrzeugen 4 oder parallel zum Fahrweg 16 zu parken. Der Bordstein 10 hat die höchste Priorität, wobei die Räder des Ego-Nutzfahrzeugs 11 knapp neben dem Bordstein 10 stehen sollen, um den Platz zum Vorbeifahren auf der Straße 3 zu maximieren. Wenn kein Bordstein 10, sondern eine Linie 8 zur Abgrenzung des Parkstreifens zur Straße 3 vorhanden ist, dann kann auch diese verwendet werden. Weiter kann parallel zu den Seitenkanten 14 anderer Fahrzeuge 4 geparkt werden. Falls keine Fahrzeuge 4, sondern nur andere Objekte (wie zum Beispiel runde Blumenbehälter) vorhanden sind, dann kann parallel zum Fahrweg 16 des Ego-Nutzfahrzeugs 11 geparkt werden. Der Bordstein 10 und die anderen Fahrzeuge 4 und/oder Objekte werden dabei ebenfalls durch die am Ego-Nutzfahrzeug 11 LKW vorhandenen Sensoren (Radar, Lidar, Ultraschall und/oder Kamera) detektiert.

Nach der Ermittlung der Endposition für das Parken an der Laderampe 1 oder am Straßenrand 5 werden die Daten dem Fahrer in einem Bildschirm angezeigt. Dieser kann im nächsten Schritt die Daten korrigieren, bevor er diese zur Unterstützung des manuellen Parkvorgangs (Fahrer steuert Beschleunigung und Lenkung) nutzen oder einen automatisierten Parkvorgang (System steuert Beschleunigung und Lenkung und Fahrer überwacht) startet. Hierbei kann der Fahrer auch festlegen, ob nur der Auflieger 7 und/oder Anhänger 7 oder der komplette Ego-Nutzfahrzeug-Zug entsprechend den Vorgaben geparkt werden soll. Dies hat den Vorteil, dass eventuell weniger Schritte zum Parken benötigt werden und der Fahrer im nächsten Schritt mit der Zugmaschine 6 weiterfährt und/oder an anderer Stelle parkt. Auch kann der Fahrer festlegen, falls mehrere Laderampen 1 oder Parklücken 9 vorhanden sind, in welche der Laderampen 1 oder Parklücken 9 er parken möchte und entsprechend eine der vorausberechneten Endpositionen auswählen und/oder korrigieren.

Bei der Anzeige der ermittelten Daten im Bildschirm können die Daten entweder direkt angezeigt werden oder es wird eine grafische Anzeige mit erweiterter Realität verwendet. Hierbei wird dem Fahrer die Endposition über einem Echtzeit-Kamerabild angezeigt, sodass der Fahrer erkennen kann, wo das System das Ego-Nutzfahrzeug 11 parken möchte. Diese Position kann der Fahrer direkt verändern, beispielsweise über Tasten, ein Drehrad und/oder direkt per Berührung auf dem als Touchscreen ausgebildeten Bildschirm. Er kann dabei signifikante Punkte markieren und verändern, wie zum Beispiel erkannte Linie 8 beim Parken an der Laderampe 1 oder den Verlauf des Bordsteins 10. Zusätzlich kann der Fahrer Parameter verändern, beispielsweise ob zwischen den Linien 8 oder links- / rechtbündig zur Linie 8 geparkt werden soll.

Nach der optionalen Korrektur wird eine Trajektorie zur Endposition ermittelt, wobei vorhandene Objekte umfahren werden oder ein minimaler Abstand A zu den Objekten eingehalten wird. Die Objekte werden dabei ebenfalls mit den Sensoren am Ego-Nutzfahrzeug 11 erkannt. Wichtig ist hierbei, dass sowohl die Trajektorie der Zugmaschine 6 als auch die verbundene, aber unterschiedliche Trajektorie des Anhängers 7 und/oder Aufliegers 7 kollisionsfrei geplant werden, da der Anhänger 7 und/oder Auflieger 7 eine andere Trajektorie fährt und bei der Rückwärtsfahrt zum Ausbrechen neigt.

Nach der optionalen Korrektur und der Trajektorien-Planung wird der Parkvorgang manuell oder automatisiert gestartet. Beim manuellen Parken werden dem Fahrer der aktuelle Abstand A und eine Winkeldifferenz und/oder Lenkbewegungen auf Basis der Endposition und/oder die Trajektorie selbst im Bildschirm angezeigt und/oder über eine akustische Rückmeldung mit verschiedener Tonhöhe und Tonabstand angegeben. Beim automatisierten Parkvorgang steuert das System den Parkvorgang auf Basis der Trajektorie bis zur Endposition, wobei der Fahrer jederzeit eingreifen und bremsen und/oder lenken kann.

Die Erfindung betrifft ein Verfahren und ein System zum Parken eines Ego-Nutzfahrzeug 11 an einer Laderampe 1 oder an einem Straßenrand 5.

Um dem Fahrer des Ego-Nutzfahrzeugs 11 ein unfallfreies und präzises Parken zu ermöglichen, wird erfindungsgemäß vorgeschlagen, dass in einem Schritt S2 die Absicht zu Parken dem Ego-Nutzfahrzeug 11 vermittelt wird, in einem Schritt S1 die Charakteristika des Ego-Nutzfahrzeugs 11 ermittelt werden, in einem weiteren Schritt S3 die Fahrzeugumgebung ermittelt wird, wobei eine Anzahl von nutzbaren Stehplätzen 9 an Laderampen 1 oder Straßenrändern 5 oder bereits geparkten Nutzfahrzeugen 2 erkannt und die Endposition des Stehplatzes 9 ermittelt wird, wonach in einem weiteren Schritt S4 der Winkel zwischen dem Ego-Nutzfahrzeug 11 in seiner momentanen Position und der Endposition des Stehplatzes 9 errechnet wird, wonach eine Trajektorie zum Einparken aus den ermittelten Daten errechnet wird. In einem weiteren Schritt S5 wird der Parkvorgang gestartet, wobei der Abstand A und Winkel α zur Endposition kontinuierlich ermittelt wird und die Fahrgeschwindigkeit des Ego-Nutzfahrzeugs 11 mit Annäherung an die Endposition reduziert wird.

In einer Ausführungsform erfolgt die Ermittlung der Charakteristika des Ego-Nutzfahrzeugs 11 durch Auslesen der im bordeigenen Speicher eines Steuergeräts abgelegten Daten oder durch Zusenden von in einer Cloud abgelegten Daten.

In einer Ausführungsform erfolgt die Ermittlung der Charakteristika des Ego-Nutzfahrzeug 11 mittels zumindest einer Kamera, insbesondere einer Spiegelersatzkamera.

In einer Ausführungsform erfolgt die Vermittlung des Parkwunsches an das Ego-Nutzfahrzeug 11 durch Betätigung eines Bedienelementes.

In einer Ausführungsform erfolgt die Vermittlung des Parkwunsches an das Ego-Nutzfahrzeug 11 durch Einlegen des Rückwärtsgangs.

In einer Ausführungsform erfolgt die Ermittlung der Fahrzeugumgebung durch ein satellitengestütztes Positionserkennungssystem (beispielsweise GPS) hinsichtlich der Positionserkennung und mittels zumindest einer Kamera hinsichtlich der Objekterkennung.

In einer Ausführungsform werden zur Erkennung der Endposition der Stehplätze 9 mittels Kameras Linien 8, insbesondere Begrenzungslinien, auf dem Boden ermittelt.

In einer Ausführungsform werden die Begrenzungslinien auf einem Bildschirm visualisiert und dem Fahrer zur Wahl angeboten, ob er links, rechts oder mittig der Linien 8 parken will.

In einer Ausführungsform wird die Endposition des jeweiligen Stehplatzes 9 über eine Stehplatzerkennung mittels Kameras und einer Bildverarbeitung erkannt.

In einer Ausführungsform wird die errechnete Trajektorie auf einem Bildschirm angezeigt. In einer Ausführungsform wird die Trajektorie durch Beeinflussung der angezeigten Trajektorie mittels Tastatureingabe, der Betätigung eines Cursors oder Bildschirmberührung durch den Fahrer nach Bedarf korrigiert.

In einer Ausführungsform erfolgt der manuelle Korrekturschritt des Fahrers infolge der Angabe des Parkens für den kompletten Ego-Nutzfahrzeug-Zug oder nur für den Auflieger 7 und/oder Anhänger 7.

In einer Ausführungsform erfolgt der manuelle Korrekturschritt des Fahrers in der Auswahl eines Stehplatzes 9 aus mehreren am Straßenrand befindlichen Parklücken 9 oder von mehreren Laderampen 1.

In einer Ausführungsform wird auf dem Bildschirm nach Errechnung der Trajektorie ein Avatar-Fahrzeug abgebildet, dessen Position der Fahrer bei Bedarf mittels Tasten, Drehrad oder per Touch am Bildschirm ändert.

In einer Ausführungsform wird zusätzlich die Umgebung des Ego-Nutzfahrzeugs 11 auf dem Bildschirm visualisiert, insbesondere die Umgebung der Endposition des Ego-Nutzfahrzeugs 11, welche vom Fahrer mittels Tasten, Drehrad oder per Touch veränderbar ist, wobei insbesondere der Verlauf des Bordsteins 10 oder einer Linie 8 bei der Laderampe 1 und die Weise, wie relativ zur Linie 8 geparkt werden soll, verändert wird.

In einer Ausführungsform wird beim Andocken an eine Kante 15, insbesondere Abschlusskante, der Laderampe 1 der Abstand A zu einer bodenseitig unterhalb der Abschlusskante ausgebildeten, dieser zugeordneten parallelen Linie 8 mittels der Spiegelersatzkamera kontinuierlich erfasst.

In einer Ausführungsform wird beim Andocken an eine Kante 15, insbesondere Abschlusskante, der Laderampe 1 der Abstand A mittels Bildverarbeitung oder über Höhenmessung mittels Lidar oder Radar kontinuierlich ermittelt.

In einer Ausführungsform wird beim Andocken an eine Kante 15, insbesondere Abschlusskante, der Laderampe 1 der Abstand A zur Kante 15 der Laderampe 1 durch eine Rückfahrkamera und Bilderkennung kontinuierlich gemessen und farblich und/oder graphisch in einem Bildschirm visualisiert.

In einer Ausführungsform werden beim Andocken an eine Kante 15, insbesondere Abschlusskante, der Laderampe 1 bereits geparkte Nutzfahrzeuge 2 gleicher Länge und Größe mittels Bilderkennung und Messung der Länge ermittelt, wobei die Vorderkante 13 der Nutzfahrzeuge 2 und deren Versatz V auf die Abschlusskante der Laderampe 1 erfasst wird und die dabei ermittelten Daten für das Anfahren des Ego-Nutzfahrzeugs 11 an die ihm zugeordnete Laderampe 1 zum Erreichen der Endposition übertragen werden.

In einer Ausführungsform werden zum Parken des Ego-Nutzfahrzeugs 11 an einem Straßenrand 5 oder an bereits geparkten Nutzfahrzeugen 2 die nutzbaren Stehplätze 9 und deren Umgebung unter Berücksichtigung des zu erwarteten Lenkradius beim Lenkmanöver mittels vorhandener Sensoriken wie Radar, Lidar und Kameras erfasst und vermessen, wobei die Trajektorie an ein freies Einparken störende Objekte der Umgebung durch Abstandhaltung angepasst wird oder der Stehplatz 9 als nicht zum Einparken geeignet identifiziert wird.

In einer Ausführungsform werden auf dem Weg zum einzunehmenden Stehplatz 9 befindliche Objekte sensorisch detektiert und umfahren.

In einer Ausführungsform wird der Parkvorgang entlang der ermittelten finalen Trajektorie bis zur Endposition vollautomatisiert gesteuert.

In einer Ausführungsform erhält der Fahrer optische und/oder akustische Signale über den momentanen Abstand A zum Stehplatz 9 und eine eventuelle Winkeldifferenz in der Lenkbewegung zur ermittelten Trajektorie.

### Bezugszeichenliste

- 1: Laderampe
- 2: Nutzfahrzeug
- 3: Straße
- 4: Fahrzeug
- 5: Straßenrand
- 6: Zugmaschine
- 7: Auflieger, Anhänger
- 8: Linie
- 9: Parklücke, Stehplatz
- 10: Bordstein
- 11: Ego-Nutzfahrzeug
- 12: Gebäude
- 13: Kante, Vorderkante
- 14: Kante, Seitenkante
- 15: Kante
- 16: Fahrweg

- A: Abstand
- L: Länge
- LA: seitliche Ausrichtung
- S1 bis S5: Schritt
- V: Versatz
- α: Winkel

## Patentansprüche

1. Verfahren zum Parken eines Ego-Nutzfahrzeug (11) an einer Laderampe (1) oder an einem Straßenrand (5),
**dadurch gekennzeichnet, dass** in einem Schritt (S2) eine Absicht zu parken erkannt wird, in einem Schritt (S1) Charakteristika des Ego-Nutzfahrzeugs (11) ermittelt werden, in einem weiteren Schritt (S3) eine Fahrzeugumgebung ermittelt wird, wobei eine Anzahl von nutzbaren Stehplätzen (9) an Laderampen (1) oder Straßenrändern (5) oder bereits geparkten Nutzfahrzeugen (2) erkannt und die Endposition des Stehplatzes (9) ermittelt wird, wonach in einem weiteren Schritt (S4) ein Winkel (α) zwischen dem Ego-Nutzfahrzeug (11) in seiner momentanen Position und einer Endposition des Stehplatzes (9) errechnet wird, wonach eine Trajektorie zum Einparken aus den ermittelten Daten errechnet wird, wobei in einem weiteren Schritt (S5) ein Parkvorgang gestartet wird, wobei der Abstand (A) und Winkel (α) zur Endposition kontinuierlich ermittelt wird und die Fahrgeschwindigkeit des Ego-Nutzfahrzeugs (11) mit Annäherung an die Endposition reduziert wird.

2. Verfahren nach Anspruch 1,
**dadurch gekennzeichnet, dass** die Ermittlung der Charakteristika des Ego-Nutzfahrzeugs (11) durch Auslesen der in einem bordeigenen Speicher eines Steuergeräts abgelegten Daten oder durch Zusenden von in einer Cloud abgelegten Daten und/oder mittels zumindest einer Kamera, insbesondere einer Spiegelersatzkamera.

3. Verfahren nach Anspruch 1 oder 2,
**dadurch gekennzeichnet, dass** die Erkennung der Absicht des Parkens anhand der Betätigung eines Bedienelementes oder durch Einlegen des Rückwärtsgangs oder durch Interpretation der Umgebung oder positionsbasiert erfolgt.

4. Verfahren nach einem der vorhergehenden Ansprüche,
**dadurch gekennzeichnet, dass** zur Erkennung der Endposition der Stehplätze (9) mittels Kameras Linien (8), insbesondere Begrenzungslinien, auf dem Boden ermittelt werden oder dass die Endposition des jeweiligen Stehplatzes (9) über eine Stehplatzerkennung mittels Kameras und einer Bildverarbeitung erkannt wird.

5. Verfahren nach einem der vorhergehenden Ansprüche,
**dadurch gekennzeichnet, dass** beim Andocken an eine Kante (15) der Laderampe (1):
- der Abstand zu einer bodenseitig unterhalb der Kante (15) ausgebildeten, dieser zugeordneten parallelen Linie (8) mittels einer Spiegelersatzkamera kontinuierlich erfasst wird,
- der Abstand (A) mittels Bildverarbeitung oder über Höhenmessung mittels Lidar oder Radar kontinuierlich ermittelt wird,
- der Abstand zur Kante (15) der Laderampe (1) durch eine Rückfahrkamera und Bilderkennung kontinuierlich gemessen und farblich und/oder graphisch in einem Bildschirm visualisiert wird, und/oder
- bereits geparkte Nutzfahrzeuge (2) gleicher Länge und Größe mittels Bilderkennung und Messung der Länge ermittelt werden, wobei eine Vorderkante (13) der Nutzfahrzeuge (2) und deren Versatz (V) auf die Kante (15) der Laderampe (1) erfasst wird und die dabei ermittelten Daten für das Anfahren des Ego-Nutzfahrzeugs (11) an die ihm zugeordnete Laderampe (1) zum Erreichen der Endposition übertragen werden.

6. Verfahren nach einem der vorhergehenden Ansprüche,
**dadurch gekennzeichnet, dass** zum Parken des Ego-Nutzfahrzeugs (11) an einem Straßenrand (5) oder an bereits geparkten Nutzfahrzeugen (2) die nutzbaren Stehplätze (9) und deren Umgebung unter Berücksichtigung eines zu erwarteten Lenkradius bei einem Lenkmanöver mittels vorhandener Sensoriken erfasst und vermessen werden, wobei die Trajektorie an ein freies Einparken störende Objekte der Umgebung durch Abstandhaltung angepasst oder der Stehplatz (9) als nicht zum Einparken geeignet identifiziert wird.

7. Verfahren nach einem der vorhergehenden Ansprüche,
**dadurch gekennzeichnet, dass** der Winkel (α) anhand von Linien (8) auf dem Boden, Seitenkanten (14) anderer Nutzfahrzeuge, einer Ausrichtung einer Kante (15) der Laderampe (1) und/oder einer Ausrichtung eines Bordsteins (10) erkannt wird, insbesondere anhand von Daten aus einer Kamera einem Radarsensor und/oder einem Lidarsensor.

8. System zum Parken eines Ego-Nutzfahrzeug (11) an einer Laderampe (1) oder an einem Straßenrand (5),
**dadurch gekennzeichnet, dass** das System zur Durchführung des Verfahrens nach einem der vorhergehenden Ansprüche konfiguriert ist.
